# EUROPEAN PATENT APPLICATION

(11) **EP 1 359 780 A1**
(43) Date of publication of application: **05.11.2003**
(21) Application number: 03008640.9
(22) Date of filing: 15.04.2003
(51) Int. Cl.: H04Q 7/36

(54) **System and method for simulating the management of quality of service in a network for mobile radio equipment**

(30) Priority: 22.04.2002 IT TO20020350
(71) Applicant: Telecom Italia S.p.A., 20123 Milano (IT)
(72) Inventor: Bizzarri, Simone, 10148 Torino (IT); Terreno, Luca, 10100 Torino (IT)
(74) Representative: Giannesi, Pier Giovanni

(57) **Abstract**

A system for simulating the behaviour of a network for mobile radio networks comprises a module for simulating a Quality of Service Manager (QoS Manager), interacting with a Radio Resources Manager (RRM) and with a Core Network Interface Resources Manager (CNIRM), to verify the availability and manage the assignment and/or reallocation of resources on the interface (Gb; Iu) towards the core network and on the radio interface (Um; Uu), taking into account the service profile of users already connected to the network and of the service profile of a user requesting the service.

## Description

### Technical Field

The present invention relates to a system for simulating the behaviour of a telecommunications network for mobile radio equipment or cellular telephones and to a related method which allows to simulate the behaviour of this type of networks.

In particular, the invention relates to a system in which, by means of a computer, it is possible to simulate the management of the quality of service in a network mobile radio equipment, to obtain the best performance for each individual service optimising the resources employed.

### Background Art

Telecommunication networks for mobile radio equipment have limited resources, comprising for instance optical fibres, cables, various apparatuses, radio frequencies, etc.. The quantity of resources available in a telecommunication network varies with the number of users, when a large number of users is utilising the network it is possible not to have sufficient resources for new users.

In current telecommunication networks, when there are insufficient resources to support new users, the new users are refused service. This behaviour by the network's operator obviously causes customer dissatisfaction.

Known systems for simulating telecommunication networks generally allow to verify the behaviour of such networks taking into account various possible scenarios, represented, for instance, by number and type of expected apparatuses, types of services made available and distribution of said services over time.

A system for simulating telecommunication networks, able to simulate networks having high complexity in terms of quantity of apparatuses, is described for instance in the patent application WO 02/104055.

The system described in the aforesaid document comprises an integrated simulation environment having a module structure with interchangeable objects including a simulation engine and a plurality of devices representative both of network devices and network physical elements. Thanks to the structure with objects that are interchangeable and able to be activated selectively, the system allows to simulate networks for mobile radio apparatuses having high complexity in terms of quantity of apparatuses and type of systems.

Said system, however, does not provide for the possibility of modelling and simulating the resource management policies for mobile radio systems, for instance of the GSM/GPRS or UMTS type, in order to differentiate the quality of service offered to users based on the service and on the user's subscription both from the viewpoint of performance and from the viewpoint of the impact these policies have on the management of the resources of the system itself.

The present invention therefore is aimed at solving the problem of how to simulate the behaviour of a telecommunication network under particularly critical operating conditions, by number of users or quantity of data transmitted, from the viewpoint of managing quality of service, differentiating different services and different user types.

This and other aims are achieved by means of the system, and the related method, for simulating the management of the quality of service in a network for mobile radio apparatuses as claimed in the accompanying claims.

### Summary of the invention

Advantageously, according to the invention, the simulation system is provided with additional modules which, taking account of different types of users and services, allow to set different ways of managing the quality of service offered to the users, immediately evaluating their cost-effectiveness for the network operator.

The network operator can thereby carry out detailed evaluations both on the performance of the management policy in terms of ability to differentiate and guarantee the level of quality of service negotiated with the various users and on the impact thereof on the use of the resources of the system, in particular on the radio resources, directly evaluating the impact of any changes in the management of the users or of the services offered on the functionality and on the efficiency of the network.

### Brief Description of Drawings

This and other characteristics of the present invention shall become more readily apparent from the following description of a preferred embodiment thereof, provided purely by way of non limiting example, and from the accompanying drawings in which:
Figure 1 is a block diagram of a system for simulating a network for mobile radio equipment according to the present invention;
Figure 2 is a diagram of an example of operation of the simulation system of Figure 1;
Figure 3 shows a flow chart of a first algorithm for seeking resources; and
Figures 4a and 4b show a flow chart of a second algorithm for seeking resources.

### Detailed description of the preferred embodiments

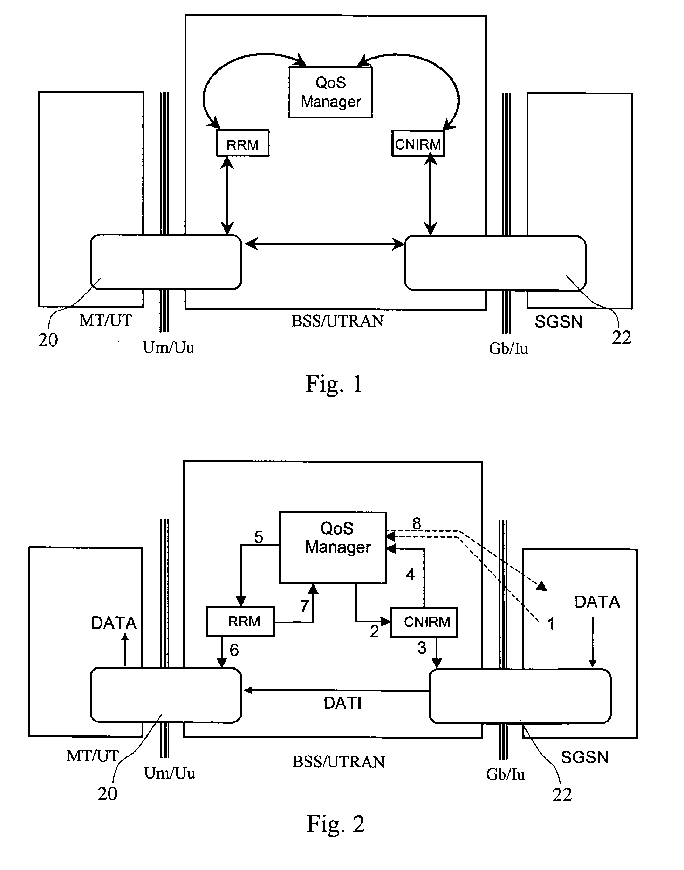

With reference to Figure 1, a system for simulating the behaviour of a network for mobile radio apparatuses, for instance able to provide voice or data services to a plurality of users, comprises a plurality of mutually interacting simulation modules, able to simulate the operation of different parts of the network:
- a module for simulating a mobile terminal, generally designated as MT in GPRS systems and UT in UMTS systems;
- an SGSN module for simulating a node for accessing a core network, or mobile radio transport network;
- a module for simulating an access sub-system, known for instance as BSS in GPRS systems or as UTRAN in UMTS systems, able to interface with a mobile terminal MT/UT by means of a radio interface (Um in GPSR, Uu in UMTS) and with a node SGSN for accessing the core network by means of a dedicated interface (Gb in GPRS, Iu in UMTS); the blocks 20 and 22 in the diagram of Figure 1 respectively designate the radio protocols and the interface protocols towards the core network;
- an RRM module for simulating a Radio Resource Manager, indicated in the block diagram of Figure 1 within the module for simulating an access sub-system BSS/UTRAN, which manages the resources available on the radio interface Um/Uu;
- a CNIRM module (Core Network Interface Resource Manager) for simulating a resource manager on the interface Gb/Iu towards the core network; and
- a QoS-Manager module for simulating a quality of service manager, interacting with the radio resource manager RRM and with the core network interface resource manager CNIRM.

The aforesaid simulation modules are implemented within an electronic computer, for instance a known computerised work station, provided with a display device and means for entering data, for instance the insertion of a simulation scenario. The simulation scenario in particular comprises, in addition to the technical and structural characteristics of the network for mobile radio equipment to be simulated, data relating to the service profiles of the users whose access to the network is to be simulated, as described in detail below.

Advantageously, according to the invention, the QoS-Manager module allows to verify the availability and to manage the assignment and/or reallocation of resources on both interfaces Gb/Iu (towards the core network) and Um/Uu (radio interface), taking into account the service profile of users already connected to the network and the service profile of a user who requests the service, as described in detail below.

For the management of the quality of service, the system provides for each user of the network to be associated to a service profile comprising at least a parameter that defines the quality of service expected by that user.

For instance, users could be divided in two main categories, Gold users and Silver users, Gold users having greater privileges than Silver users. Each category is associated to a given value of the parameter, which defines a priority level corresponding to the quality of service. There could be three, four or even more categories of users, depending on requirements, each category being associated to a different parameter value.

The value of the parameter depends on a plurality of attributes, the combination whereof defines a priority level corresponding to the quality of service.

In the embodiment illustrated herein, the parameter comprises five different attributes or classes:
a) precedence class - defined on three levels (High, Normal and Low Priority) indicates the relative importance of maintaining service agreements in abnormal conditions, for instance under conditions of limited resources or network congestion. If, for instance, there is a situation of congestion and resources are requested for a new service, the priority of the requesting user and that of the previously allocated users are verified, and if the requesting user has higher priority, the resources allocated to the other users are reduced, to assign them to the new service.
b) delay class - this attribute defines the maximum value, for the mean value and the 95% value, which must be respected as the packets travel through the network. This delay includes the delay in accessing the radio channel (in up-link), the delay in scheduling the radio channel (in down-link), the delay in travelling through the radio channel (in both directions), and the delay in travelling through the network. The network operator should provide adequate resources (on the radio interface and on the network) to support the expected number of users within each cell for a given delay class. This attribute is particularly relevant for interactive services because a rapid interaction is needed between the two hosts, whereas it is less relevant for services such as those of "file downloading".
c) reliability class - data reliability is defined in terms of residual error rate (RER) for the following cases:
   - probability of data loss;
   - probability of data sent out of sequence;
   - probability of transmission of duplicate data;
   - probability of data corruption.

   If a service, such as file downloading, requires high reliability it will be necessary to use adequate encoding schemes and reliability classes, and to change them, even after setting up the service, to keep residual error under control (RER).
d) Peak throughput class - user data throughput is specified by a set of throughput classes that characterise the required bandwidth. Throughput is defined by two sub-classes, peak and average. Peak throughput specifies the maximum rate whereat data are to be transferred through the network, and there is no guarantee that said rate is maintained during the entire connection, since it depends on the availability of radio resources and of the resources on the interface towards the core network.
e) average throughput class - average throughput specifies the average speed whereat data are expected to be transferred through the network; the network can impose a maximum limit on negotiable average speed, even when resources are available.

A parameter is therefore characterised by a generally numeric value that defines a priority level that depends on the selected combination of attributes. At each request for resources by a new user, in particular when resources are not available, the Quality of Service (QoS) Manager compares the priority level of the user who requests the service with the priority level of users already connected with the network, and, if said new user has a higher priority level than other, already connected, users, allocates part of the resources of the other connected users to the new user.

The functions of some simulation modules that allow in particular to simulate quality of service management are now described in greater detail.

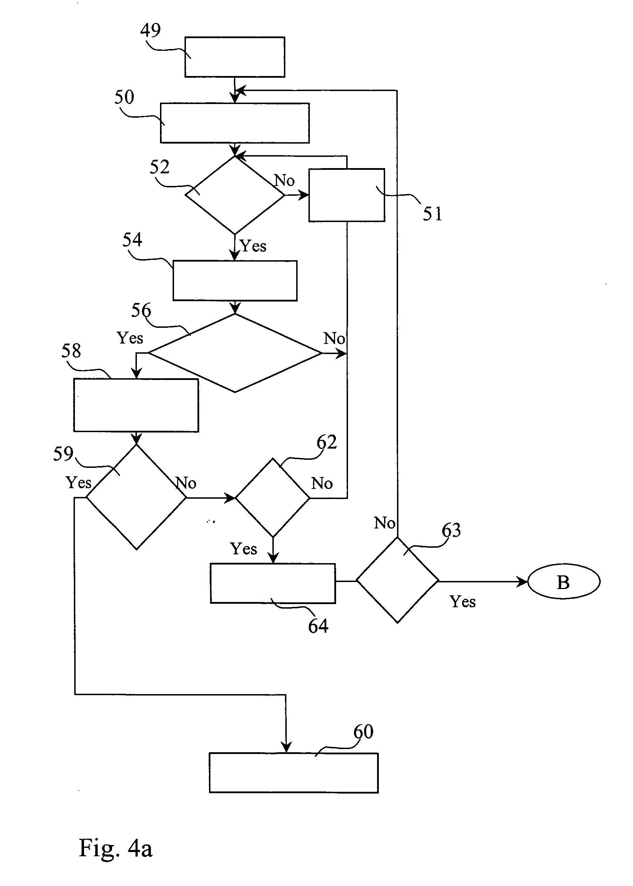

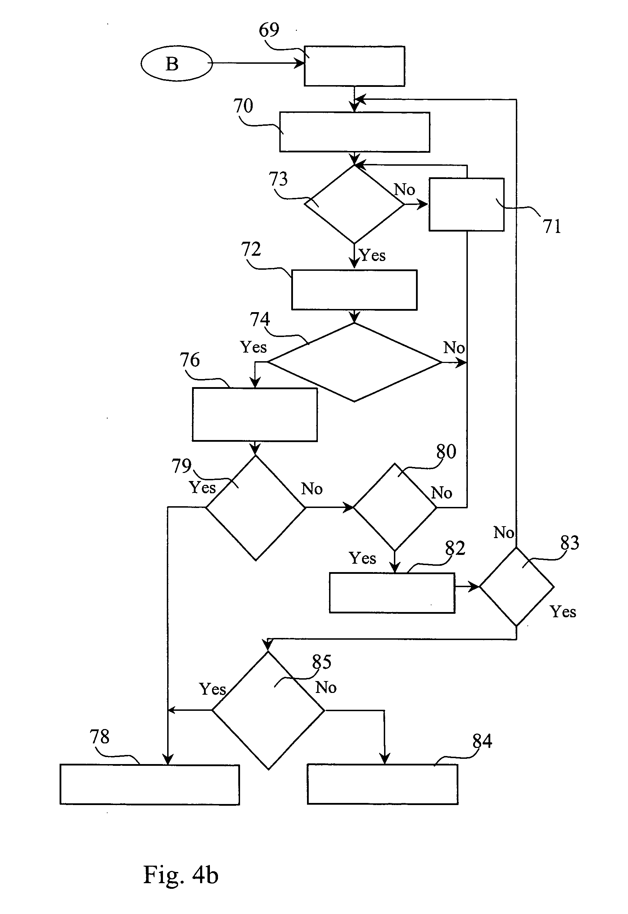

The Radio Resource Manager (RRM) module performs two fundamental functions:
- interfacing with the QoS Manager passing to it all messages relating to the activation, modification, cancellation, etc. of a connection, in such a way as to obtain information on the strategy to be adopted depending on the quality of service profiles of the service in question;
- managing the congestion of the radio resources taking into account the priority of the connected users and of the requesting user; if radio resource congestion is present, it is necessary to take into account each allocated user and who requests service, in order to differentiate the offered service according to priority. The algorithm used to manage radio resources will be illustrated in detail below with reference to the example shown in Figures 4a and 4b.

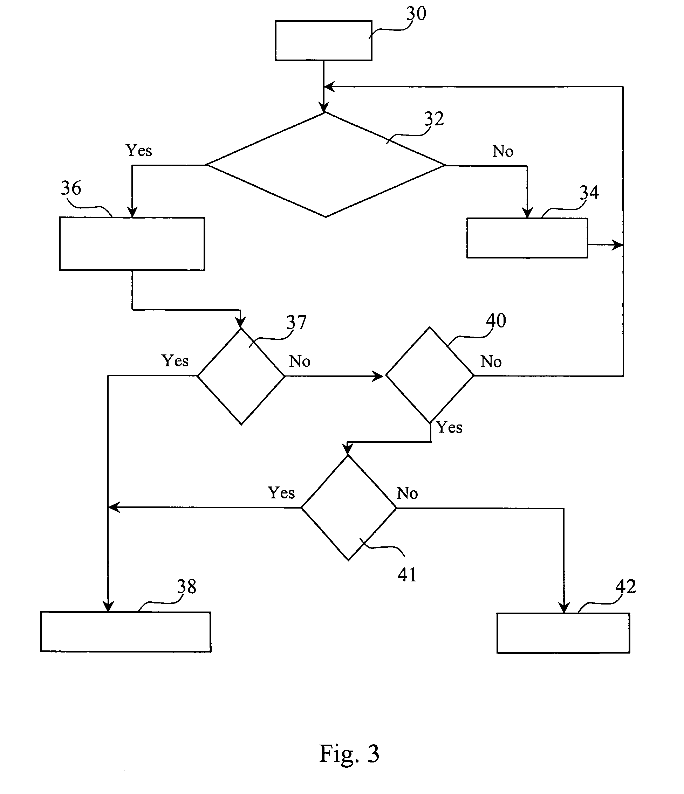

The CNIRM (Core Network Interface Resource Manager) module has, with respect to the interface with the core network, functions that can be defined as symmetrical relative to the Um/Um radio interface, to manage the allocation, assignment and freeing of available resources. In the CNIRM module is also present a data structure that keeps track of all active connections with the related priority parameters, flow control and identification of the mobile terminal MT/UT. One of the main functions of the CNIRM module is to assign resources as a result of a request by the QoS Manager, since the CNIRM module controls resource availability and decides how to allocate, or re-allocate, resources in such a way as to meet requests, according to an algorithm that will be illustrated in detail below with reference to the example shown in Figure 3.

The main functions of the QoS Manager module are as follows:
- intercepting the messages of the RRM module relating to the management of the services (activation, modification, cancellation, ...), which are therefore forwarded by the same RRM module to the QoS manager who will introduce all quality of service parameters;
- calculating priority for each service: upon request of a new service, the QoS-Manager calculates the priority (for instance Silver o Gold) that service is to have;
- interfacing the RRM module with the CNIRM module upon activation of a connection; following a service request from the RRM module, the QoS Manager (which intercepts the message) contacts first the CNIRM module to verify the availability of resources, if they are available the connection activation procedures continue, otherwise the connection is denied immediately. The policy of verifying resource availability on the interface Gb/Iu towards the core network before verifying the corresponding availability on the radio interface Um/Uu was adopted to avoid allocating radio resources (more "precious") and then having to de-allocate them due to the lack of resources on the Gb/Iu interface;
- keeping track of the state of the connections; the QoS-Manager manages a data structure in which the states of each connection are recorded, said data structure comprises three lists to store user data during communication:
   1) Ms_Wait_For_Activation: in this list are placed all mobile terminals awaiting the activation of the service they have requested, in this structure are recorded insertion times, data about the MT and its priority.
   2) Ms_ Active: once the connection is activated, the involved terminal is moved into this list with all its data.
   3) Ms_Wait_For_DeActivation: when the request to drop a connection is received, the terminal is placed in this list, awaiting the completion of all procedures.

The better to understand the functionalities introduced by the modules illustrated above, we shall now analyse, with reference to Figure 2, the sequence of events needed to activate and/or manage a downlink connection for a data service. In Figure 2, the numbered arrows (1 through 8) indicate the sequence of the operations carried out, illustrated in detail below. The arrows indicated as "DATA" indicate instead the flow of the data transfer.

During the downlink phase, at the arrival of a data packet from the lower layers, the QoS Manager module performs the checks for that user (arrow 1), and if the request is accepted, it sends the resource allocation request to the CNIRM module (arrow 2).

If the requested resources are available, the CNIRM module sends the resource allocation command to the interface protocols towards the core network (arrow 3), and sends the reply that the allocation has taken place to the QoS-Manager module (arrow 4) which sends the request for radio resource allocation to the RRM module (arrow 5).

If the requested resources are available, the RRM module sends the resource allocation command to the radio protocols 20 (arrow 6), and replies positively that the allocation has taken place (arrow 7).

Lastly, the QoS-Manager sends (arrow 8) the positive reply to the request for resources which enables data transmission (arrows designated as "DATA").

Figure 3 shows an example of an algorithm for the allocation, or reallocation, of the resources on the interface Gb towards the core network, as a result of a request for resources by a user for whom no available resources have been found. The example illustrated herein relates to a case in which only two types of users, Silver and Gold, and it relates to a GPRS network environment.

As a first verification, not shown in Figure 3, the system verifies whether user requesting the service is a Silver or Gold user: in the first case, the connection is denied without any additional check, while in the second case a scan is conducted of all active connections on the interface Gb with the goal of finding Silver users whose resources must be reduced in order to be assigned to the Gold user in question.

The strategy whereby the resources are sought follows the flow chart of Figure 3. The algorithm provides for scanning (block 30) of the active mobile terminals MT, verifying (block 32) if the MT is allocated on the BVC (BSSGP Virtual Channel) of the Gold user, if the MT in question is Silver and verifying whether the allocated resources have not be reduced already. If the aforesaid checks yield a negative outcome, the system moves to the successive MT (block 34), otherwise its sends to the involved MT a notification to free a part of the resources (block 36).

If sufficient resources have been found (condition verified in block 37), they are allocated to the Gold user who had requested the service (block 38), otherwise it verifies whether it is possible to proceed with scanning other MTs (block 40), to seek other resources. If at least part of the resources have been found (condition verified in block 41) they are allocated to the Gold user who had requested the service (block 38), otherwise, if the scan is completed without finding sufficient resources, the connection is denied (block 42).

Figures 4a and 4b instead show an example of an algorithm for allocating, or reallocating, resources on the radio interface. In this case, too, the illustrated example relates to a case in which only two types of users are present, Silver and Gold, and it relates to a GPRS network environment.

The system verifies first whether the user who requests the service is a Silver or Gold user, in the first case the connection is denied without any additional check, in the second case all resources are scanned with the goal of freeing a part thereof (occupied by Silver users) to enable to assign them to the Gold user in question.

The resource search algorithm follows the flow diagram shown in Figures 4a and 4b.

With reference to Figure 4a, the function of the blocks 49 to 64 can be summarised as follows:
Block 49: Scan of 1st set of T.S.
Block 50: Scan of first Time-Slot of the SET.
Block 51: Move to next time-slot.
Block 52: Time-slot is a static PDCH ?
Block 54: Scan of the list of active MTs.
Block 56: Verify if MT belongs to the TS and is Silver.
Block 58: Send to current MT a notification to free resources.
Block 59: Sufficient time-slots have been found?
Block 60: Resources are allocated to Gold MT.
Block 62: All time-slots scanned?
Block 63: All sets scanned?
Block 64: Move to next set of TS

The resources are first sought on the static PDCH (Physical Data Channel), by scanning the list of active connections on the radio interface (blocks 49, 50, 51, 52) in a first set of Time Slots (TS) and subsequently verifying whether the MT uses the resources bring considered and whether it is of the Silver type (blocks 54, 56); if so, a message to free the resources is sent to the identified MT (block 58).

If sufficient resources have been found (block 59), they are allocated to the Gold user who had requested the service (block 60), otherwise the system verifies whether it is possible to scan other MTs in the same Time Slot, to seek other resources, or it moves on to a subsequent Time Slot (block 64). If all Time Slot sets were scanned (block 63) without finding sufficient resources, the system continues by seeking resources on the dynamic PDCHs, see Figure 4b.

The search for resources on the dynamic PDCHs follows a diagram equivalent to the one described above with reference to Figure 4a, the function of the blocks shown in the diagram of Figure 4b can be summarised as follows:
Block 69: Scan of 1st set of T.S.
Block 70: Scan of first Time-Slot of the SET.
Block 71: Move to next time-slot.
Block 72: Scan of the list of active MTs.
Block 73: Time-slot is a dinamic PDCH ?
Block 74: Verify if MT belongs to the TS and is Silver.
Block 76: Send to current MT a notification to free resources.
Block 78: Resources are allocated to Gold MT.
Block 79: Sufficient time-slots have been found?
Block 80: All time-slots scanned?
Block 82: Move to next set of TS.
Block 83: All sets scanned?
Block 84: Connection refused
Block 85: At least part of the resources has been found?

First, the list of active connections on the radio interface is scanned (blocks 69, 70), to verify whether the MT uses the resources being considered and whether it is of the Silver type (blocks 72, 74), wherein case a message for freeing the resources is sent to the identified MT (block 76). If sufficient resources have been found, they are allocated to the Gold user who had requested the service (block 78), otherwise other MTs in the same Time Slot are scanned, or a successive Time Slot is scanned (block 82). If all Time Slot sets have been scanned without finding sufficient resources, the connection is denied (block 84), otherwise the resources are allocated (block 78).

The reason for seeking the resources on the static PDCH first is that in the case of pre-emption by the GSM, the GSM will take resources only from the dynamic PDCHs and placing Gold users on static time slots assures a higher probability of duration of the connection and resource availability.

In the scan of the list of active connections on the Radio interface, care was taken to avoid always penalising the same MSs, by always starting the scan from the same position (for instance the start); hence, an algorithm was adopted which allows to start scanning the list from a point selected at random for each scan. One thereby avoids taking too many resources away from the same user, maintaining his/her connection active, without thereby excessively burdening the resource search algorithm, making it compare all users to decide which ones are to be deprived of resources.

## Claims

1. System for simulating the behaviour of a network for mobile radio equipment able to deliver voice or data services to a plurality of users, each user being associated to a service profile, said system comprising a plurality of mutually interacting simulation modules, able to simulate the operation of different parts of said network, among them a module for simulating an access subsystem (BSS; UTRAN) able to interface with mobile terminals (MT; UT) by means of a radio interface (Um; Uu) and with a node for accessing a core network (SGSN) by means of an interface towards said core network (Gb; Iu), said module for simulating an access subsystem (BSS; UTRAN) being provided with a radio resource manager (RRM) for managing the resources available in said radio interface (Um; Uu), **characterised in that** said module for simulating an access subsystem (BSS; UTRAN) further comprises:
- a module (CNIRM) for simulating a resource manager on said interface (Gb; Iu) towards the core network;
- a module for simulating a quality of service manager (QoS Manager), interacting with said radio resource manager (RRM) and with said manager (CNIRM) of the resources on the interface towards the core network, to verify availability and manage the assignment and reallocation of resources on said interface (Gb; Iu) towards the core network and on said radio interface (Um; Uu), taking into account the service profile of users already connected to the network and the service profile of a user who requests the service.

2. System as claimed in claim 1, wherein said service profile of each user comprises at least a parameter that defines the quality of service expected by a user.

3. System as claimed in claim 2, wherein said parameter comprises a plurality of attributes, the combination whereof defines a priority level corresponding to the quality of service.

4. System as claimed in claim 3, wherein said quality of service manager (QoS Manager) comprises means for comparing the priority level of the user who requests the service with the priority level of users already connected to the network, and means for allocating to said new user a part of the resources of the other users already connected and having a lower priority level than the priority level of said new user.

5. Method for simulating the behaviour of a network for mobile radio equipment, in an integrated simulation environment comprising a module for simulating an access subsystem (BSS; UTRAN) able to interface with mobile terminals (MT; UT) by means of a radio interface (Um; Uu) and with a node for accessing a core network (SGSN) by means of an interface towards said core network (Gb; Iu), said network for mobile radio equipment being able to deliver voice or data services to a plurality of users, each user being associated to a service profile, said method comprising the following steps:
- simulating a request for resources by a user not yet connected to the network;
- comparing the service profile of the user requesting the service with the service profile of users already connected to the network;
- verifying the availability of resources on said interface (Gb; Iu) towards the core network, allocating, if available, resources of users already connected to the network having in the service profile a lower priority level than the priority level of the service profile of said new user;
- verifying the availability of resources on said radio interface (Um; Uu) allocating, if available, resources of users already connected to the network having in the service profile a lower priority level than the priority level of the service profile of said new user.

6. Method as claimed in claim 5, wherein said service profile of each user comprises at least a parameter that defines the quality of service expected by a user.

7. Method as claimed in claim 6, wherein said parameter comprises a plurality of attributes, the combination whereof defines a priority level corresponding to the quality of service.

8. Method as claimed in claim 5, wherein said step of verifying the availability of resources on said interface (Gb; Iu) towards the core network comprises the following steps:
- verifying whether the service profile of said new user has a higher priority level than the priority level of other users already connected to the network, and denying the connection to said new user if his/her priority level is lower than that of said other users;
- performing a scan (30, 32, 34) of the users connected to the network by selecting users whose priority level is lower than the priority level of said new user and whose resources have not been reduced previously;
- freeing (36) a part of the resources of said selected users and, if said resources are sufficient to meet the request of said new user (37), allocating them (38) to said new user, or else deny the connection (42) to said new user.

9. Method as claimed in claim 5, wherein said step of verifying the availability of resources on said radio interface (Um; Uu) comprises first a step of verifying availability on static PDCH (Physical Data Channels), and subsequently verifying availability on dynamic PDCH (Physical Data Channels).

10. Method as claimed in claim 9, wherein said step of verifying the availability of resources on said static PDCHs comprises the following steps:
- conducting a scan of the active connections on said radio interface (49, 50, 52) within a first Time Slot, verifying, for each connection, whether the associated priority level is lower than the priority level of said new user (56) and, if said condition is verified, freeing part of the resources of the corresponding connection (58);
- allocating the freed resources (60), if they are sufficient (59), to said new user, or else conducting a scan of the active connections within a subsequent Time Slot (64) verifying, for each connection, whether the associated priority level is lower than the priority level of said new user (56) and, if said condition is verified, freeing part of the resources of the corresponding connection;
- repeating the previous step (62, 51) for all Times Slots available in said static PDCHs;
- if sufficient resources have not been found, moving to the subsequent steps of verifying the availability of resources on dynamic PDCHs.

11. Method as claimed in claim 9, wherein said step of verifying the availability of resources on said dynamic PDCHs, comprises the following steps:
- conducting a scan of the active connections on said radio interface (69, 70) within a first Time Slot, verifying, for each connection, whether the associated priority level is lower than the priority level of said new user (74) and, if said condition is verified, freeing part of the resources of the corresponding connection (76);
- allocating the freed resources (78), if they are sufficient (79), to said new user, otherwise conducting a scan of the active connections within a subsequent Time Slot (82) verifying, for each connection, whether the associated priority level is lower than the priority level of said new user (74) and, if said condition is verified, freeing part of the resources of the corresponding connection;
- repeating the previous step (80, 71) for all Time Slots available in said dynamic PDCH;
- if sufficient resources have not been found, denying the connection (84) to said new user.

12. Software product able to be loaded directly into the internal memory of an electronic computer and comprising portions of software codes for implementing, when the product is run on an electronic computer, the method as claimed in any of the claims 5 through 11.
